# EUROPEAN PATENT SPECIFICATION

(11) **EP 4 365 548 B1**
(45) Date of publication and mention of the grant of the patent: **17.12.2025**
(21) Application number: 23204778.7
(22) Date of filing: 20.10.2023
(51) Int. Cl.: G01C 15/00, G01C 15/02

(54) **CONSTRUCTION LAYOUT USING ROBOTIC MARKING AND AUGMENTED REALITY METADATA OVERLAYS**
KONSTRUKTIONSLAYOUT UNTER VERWENDUNG VON ROBOTISCHEN MARKIERUNG UND METADATENÜBERLAGERUNGEN DER ERWEITERTEN REALITÄT
AGENCEMENT DE CONSTRUCTION UTILISANT UN MARQUAGE ROBOTIQUE ET DES SUPERPOSITIONS DE MÉTADONNÉES DE RÉALITÉ AUGMENTÉE

(30) Priority: 04.11.2022 US 202217981377
(43) Date of publication of application: 08.05.2024
(73) Proprietor: Trimble Inc., Westminster, CO 80021 (US)
(72) Inventor: BURCZYK, David, Westminster, CO 80021 (US); ATKINS, Ben, Westminster, CO 80021 (US); LAWVER, Jordan, Westminster, CO 80021 (US); KAHLE, Kent, Westminster, CO 80021 (US)
(74) Representative: AWA Sweden AB

(56) References cited:
- EP-A1- 3 416 027
- GB-A- 2 605 442
- KR-A- 20140 091 866
- US-B1- 10 317 184
- US-B1- 11 221 217

## Description

### BACKGROUND

This disclosure relates in general to surveying systems and augmented reality. Surveying systems determine positions of points relative to each other and/or to the Earth. Surveying can be used in many applications by land surveyors, construction professionals, and civil engineers. Surveying often uses specialized and/or expensive equipment, such as laser levels, surveying rods, total stations, laser scanners, and GNSS (Global Navigation Satellite System) receivers.

In augmented reality, one or more virtual objects (e.g., computer-generated graphics) can be presented to a user in relation to real-world objects. Augmented reality can include a see-through display with a virtual object shown to a user on the see-through display. An example of an augmented-reality system is the Microsoft HoloLens. Another type of augmented reality is overlaying a virtual object on an image of the real world. For example, a smartphone camera is used to acquire an image of objects in the real world. The smart phone then overlays a graphic on the image of the real world while presenting the image on a screen of the smart phone. Artificial reality is sometimes used to refer to both augmented reality and virtual reality.
US 11 221 217 B1 discloses an augmented-reality system is combined with a surveying system to make measurement and/or layout at a construction site more efficient.
EP 3 416 027 A1 discloses an augmented-reality device and system with seamless bridging.
US 10 317 184 B1 discloses systems and methods involving a construction template system.
GB 2 605 442 A discloses a configuration method for the display of a building information model.
KR 2014 0091866 discloses a method for managing construction using augmented reality and a recording medium storing a program for executing the same, which enable a builder to accurately understand a complex construction site and easily check defects on the construction.

### BRIEF SUMMARY

The invention is defined by the independent claims. Preferred embodiments are defined in the dependent claims.
This disclosure relates to providing metadata about points, and, to using a robotic device to mark points and an augmented-reality device to provide metadata related to the marked points.

According to the invention, a system for construction layout using robotic marking and augmented-reality metadata comprises a robotic device and an augmented-reality device. The robotic device comprising instructions to mark out points in a construction site within a pre-established accuracy related to a plurality of elements in a building plan. The augmented-reality device comprising instructions to: receive data of the building plan, wherein data of the building plan includes metadata about the points; align an internal map of the augmented-reality device to the construction site; and present metadata about the points to a user of the augmented-reality device as the user looks at points in the construction site. In some embodiments, aligning the internal map of the augmented-reality device to the construction site comprises comparing locations of points in the internal map to data from the building plan; instructions of the robotic device do not have the robotic device mark metadata near points; a number of points marked is equal to or greater than 200; the pre-established accuracy is equal to or less than 5 centimeters; the robotic device is a projector; and/or the augmented-reality device is a first augmented-reality device, and the system further comprises a second augmented-reality device configured to receive data of the building plan.

According to the invention, a method for construction layout using robotic marking and augmented-reality metadata comprises receiving data from a building plan, wherein the building plan includes a plurality of elements; marking out points in a construction site related to the plurality of elements in the building plan, wherein marking out points is performed by a robotic device, and points are marked in the construction site within a pre-established accuracy; transmitting data from the building plan to an augmented-reality device, wherein data from the building plan includes metadata about the points; aligning an internal map of the augmented-reality device to the construction site; and presenting metadata about the points to a user of the augmented-reality device as the user looks at the points in the construction site. In some embodiments, aligning the internal map of the augmented-reality device to the construction site comprises comparing locations of points in the internal map to data from the building plan; points are marked without marking metadata near points; transmitting data from the building plan to the augmented-reality device is performed using one or more wireless connections a number of points marked is equal to or greater than 200; the pre-established accuracy is equal to or less than 5 centimeter; the robotic device is a quadruped; at least one of the points is marked on a ceiling; the augmented-reality device is a first augmented-reality device, and the method further comprises transmitting data from the building plan to a second augmented-reality device; and/or the first augmented-reality device receives different metadata than the second augmented-reality device.

Further areas of applicability of the present disclosure will become apparent from the detailed description provided hereinafter. It should be understood that the detailed description and specific examples, while indicating various embodiments, are intended for purposes of illustration only and are not intended to necessarily limit the scope of the disclosure.

### BRIEF DESCRIPTION OF THE DRAWINGS

The present disclosure is described in conjunction with the appended figures.
FIG. 1 depicts an embodiment of a robot marking points during layout.
FIG. 2 depicts an embodiment of an augmented-reality device aligning an internal map to a construction site.
FIG. 3 depicts an embodiment of presenting metadata to a first augmented-reality device.
FIG. 4 depicts an embodiment of presenting metadata to a second augmented-reality device.
FIG. 5 depicts an embodiment of a projector marking points.
FIG. 6 illustrates a flowchart of an embodiment of a process for construction layout using robotic marking and augmented-reality metadata.
FIG. 7 depicts a block diagram of an embodiment of a computer system.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

### DETAILED DESCRIPTION

The ensuing description of the preferred exemplary embodiment(s) will provide those skilled in the art with an enabling description for implementing a preferred exemplary embodiment. It is understood that various changes may be made in the function and arrangement of elements without departing from the scope as set forth in the appended claims.

Layout is a common workflow in the construction industry that involves translating digital designs onto the real world via high-precision instruments. This enables workers to begin fabrication work to tolerances stipulated by the design. The Layout workflow often involves laying out hundreds if not thousands of points in any given day to prepare the work to be done by subsequent workers. Layout typically uses a crew of several people to keep ahead of the work to be done. Historically, layout has been done with chains and tape measures. In modern times, these workflows have largely been performed using high precision instruments, such as robotic total stations and GNSS receivers.

A recent trend in the construction industry is to further automate layout-type tasks. For example, a number of technology providers are creating robots that, positioned with external precision sensors (such as a total station), move throughout the job site and mark floors with translated data from the design. An advantage of this approach is that it largely removes the use of humans doing the work, as this is generally tedious and repetitive work that is prone to costly errors.

In both human layout and robot layout, data being transferred from the design includes both positional data (often represented as a point or 'X') and metadata associated with a position. For example, metadata can include the point number, the type of material being installed, description of inserts, tolerance, etc. Positional data typically has explicit precision requirements, thus the need for tape measures, total stations, etc. Metadata has much less stringent precision requirements, so long as it's clear what point the metadata refers to.

Existing layout methods can be limited by a number of factors. The environment where layout is being done is often dirty and/or has other obstructions that can limit the ability to transcribe and persist data on the site. It is typically easy to recognize the location of a signal point or 'X', but can be difficult to read metadata associated with it over time. In many cases, the time it takes to add the additional metadata (either by a human or robot) is enough to deter its transcription at all. When metadata is transcribed, it is often limited to a single color (e.g., a single marker or can of spray paint), which can make it difficult to delineate between different points, types of data, etc. In some cases, the design limits the ability to mark significant amounts of data on a work surface (e.g., a concrete slab that will remain unfinished in the final design or a material that is difficult to write on). Oftentimes, the metadata associated with points changes in the time period between layout and fabrication, thus leaving the data that was marked as outdated. Existing processes can be very time intensive because of all of the metadata that must be marked. Sometimes, because of all the issues with existing processes, workers just don't mark the metadata at all. Not marking metadata can lead to bigger problems when other people come to do work and find marks on the ground with no context.

By moving the metadata to a digital visualization, the need to mark a surface can be significantly reduced. In some embodiments, only those markings that require high precision are physically marked on the surface by a human or robot. These could be physical markings or projected markings. Other data that is associated with the marked point (e.g., data that has less precision requirement) can be maintained digitally and overlaid through augmented reality. This could be in the form of a phone or tablet (e.g., pass-through AR) or a head-mounted display (e.g., Trimble XR10). By reducing the need for physical marking of associated metadata, previous system limitations described above can be reduced or removed. In some embodiments, the only mark used is a point (e.g., a dot, circle, 'X', '+', etc.). This can remove the concern about space limitations and/or dirty environments where metadata markings might not persist. In some embodiments, marks include points, lines, and/or non-letter symbols. In some embodiments, marked metadata associated with a point is no more than 7, 5, 3, 2, 1, or 0 characters, numbers, or symbols. Some worksites have very large amounts of data (e.g., more than 100, 200, 500, 1000 10,000 points to layout). Some worksites use multiple layout teams and/or robots. By reducing or eliminating marking of metadata, the speed at which points can be marked is significantly increased, as much of the physical marking is no longer performed.

In robotic scenarios, marking only the point can also reduce downtime and/or cost of operating the system as it reduces the ink required and improves the number of points that can be marked on a single battery charge. When viewed digitally, metadata (and point overlays) can be visualized in various colors or icons. The associated metadata to a point can be updated digitally in real time as designs change, as long as the positional information remains constant. Even in a situation where the positional information has also changed, an update can be shared with the user (e.g., "Warning - this laid-out point is no longer valid, please refer to new point over there --->").

For positioning, computer vision of the AR device can be used to identify the points marked (e.g., on the ground, on a wall, or on a ceiling). The AR device can reference those points back to a digital model to automatically determine and/or persist six degrees of freedom (6DOF) of the AR device in the environment. By leveraging these points, the AR device is able to overlay data at a much higher precision than it would have otherwise (e.g., because of drift errors in the AR device). In this way, the AR device and the layout system work in symbiosis. The AR device is reducing the requirements on the layout system by the layout system not marking metadata, and the points laid out by the layout system are providing higher accuracy positioning to the AR device.

Positioning data can be shared with other devices, people, or workflows. For example, existing points could be leveraged to extrapolate other information at high precision without the use of external precision instruments. In another example, another trade could use the points that have been marked to precisely align their own devices without using their own high-precision positioning (e.g., for visualization, layout, etc.).

Layout users can use robots to do their work autonomously or semi-autonomously. The act of positioning and marking is taken off their hands. Layout users may still be involved to assist the robot if the robot encounters errors, loses line-of-sight, etc. Because the metadata is moved digitally, the robot can move faster and do more points in less time (as well other benefits listed above). The positioning of the robot and/or the marks it makes can be used to position a mixed-reality (MR) or augmented-reality (AR) device, for quality assurance/control, for a fabricator, etc. Coupling an MR device with a robot for layout can increase the output/capabilities of the system: the MR device can take over or augment much of the marking tasks for the robot, and the robot can take over or augment the positioning task of the MR device.

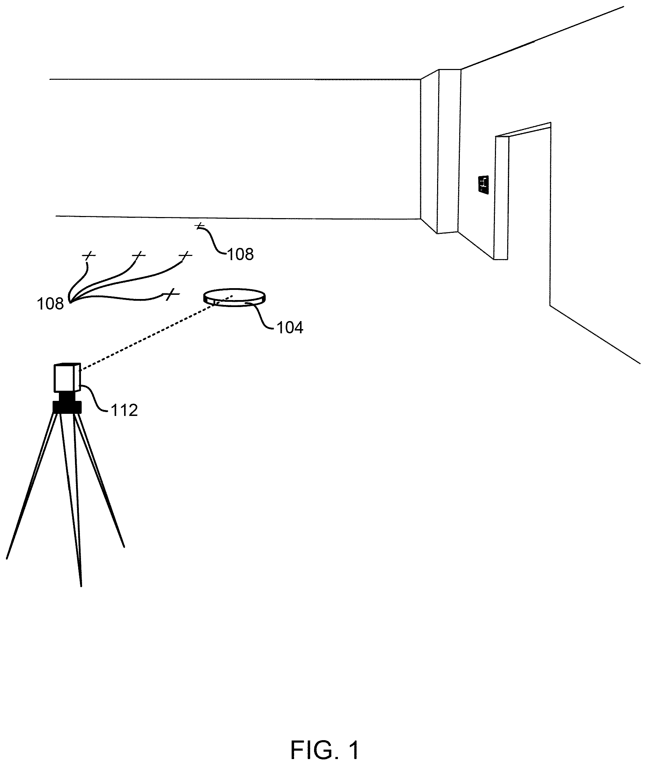

Referring first to **FIG. 1**, an embodiment of a robot 104 (e.g., a robotic device) marking points 108 during layout is shown. The robot 104 comprises instructions (e.g., in memory) to mark out points in an environment (e.g., a construction site) within a pre-established accuracy related to a plurality of elements in a building plan. For example, points 108 could be anchor points for one or more walls, and points 108 are marked in the environment with an accuracy of equal to or better than five centimeters.

The instructions of the robot 104 do not have the robot 104 mark metadata near the points 108 (e.g., metadata of points is not physically drawn next to points 108 by the robot). In some embodiments, a number of points 108 marked can be equal to or greater than 50, 100, 200, 500, 1000, or 10,000 and/or equal to or less than 100,000, 15,000, 10,000, 1000, and/or 500. In some embodiments, the pre-established accuracy is equal to or better than 5, 2, 1, or 0.5 centimeters. In some embodiments, a global navigation satellite system (GNSS) receiver is used by the robot 104 for precision positioning. In the embodiment shown, a total station 112 is used to provide precision measurement data to the robot 104, so the robot 104 can mark the points 108 within the pre-established accuracy within a GNSS-restricted environment.

In some embodiments, instructions for marking out points comes from a building plan, wherein the building plan includes a plurality of elements. Points corresponding to the plurality of elements are marked in the construction site by the robot 104. Marks of points 108 can be made in a variety of ways, including using a permanent marker and/or spray paint.

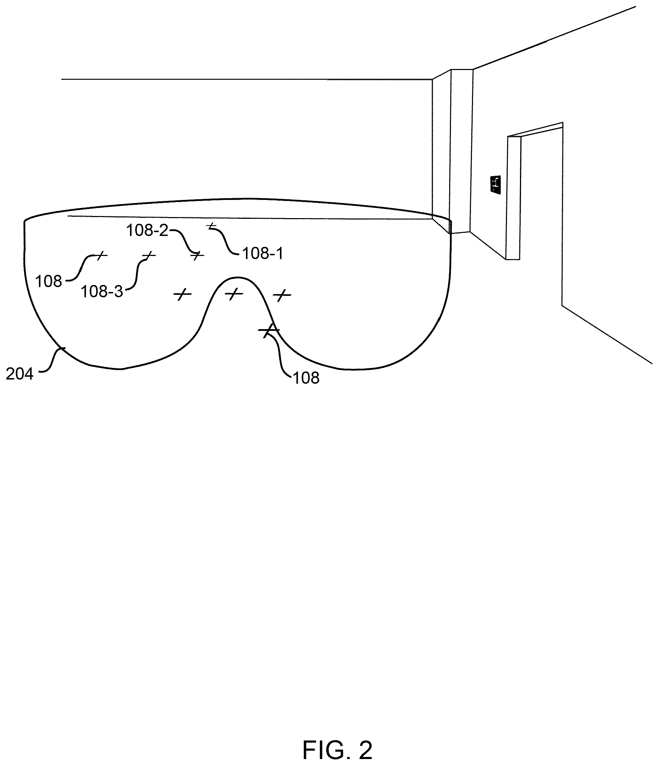

**FIG. 2** depicts an embodiment of an augmented-reality (AR) device 204 aligning an internal map of the AR device to the environment. The AR device 204 receives data of the building plan. The data of the building plan can include positioning data and metadata about the points 108. The AR device 204 can align the internal map of the AR device 204 to the construction site using positioning data from the building plan. For example, the AR device 204 can use three points (e.g., relative orientation and relative distances between points as a "fingerprint") to correlate with a digital map of the environment. In FIG. 2, the AR device 204 uses locations of a first point 108-1, a second point 108-2, and a third point 108-3 in an internal map of the AR device and compares those three points to corresponding points in the building plan. Thus, the internal map of the AR device 204 is aligned with the construction site by comparing locations of points 108 in the internal map to data from the building plan.

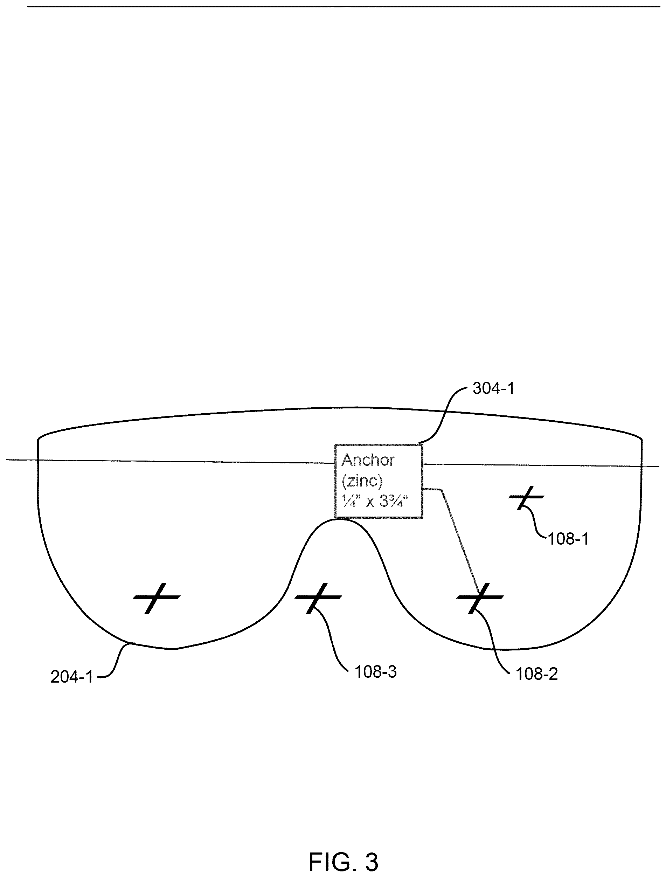

**FIG. 3** depicts an embodiment of presenting first metadata 304-1 to a first augmented-reality device 204-1. The AR device 204 is configured to present metadata 304 about one or more points 108 to a user of the AR device 204, as the user looks at points 108 in the environment. For example, the first metadata 304-1 describes a zinc wedge anchor that is 1/4 inch by 3-3/4 inches to be used at the second point 108-2.

In some embodiments, metadata can include a picture or drawing of an item to be used. In some embodiments, the picture or drawing is superimposed on an object held by the user to verify the correct component. For example, the user could hold up an anchor bolt, and a drawing of the anchor bolt to be used is superimposed on the anchor bolt held by the user. As the system matches that the anchor bolt held by the user matches the metadata, the drawing of the anchor bolt presented on a display of the augmented-reality device can turn green and/or an audio cue played to indicate to the user that the user has the correct object. The drawing presented on the display can then be removed from the display of the augmented-reality device (e.g., based on a user input or timeout) after verification. In some embodiments, verification is performed automatically (e.g., based on palm identification, when a user holds an object in a palm of the user's hand). In some embodiments, a user can enter a verification menu using a menu selection in the AR device.

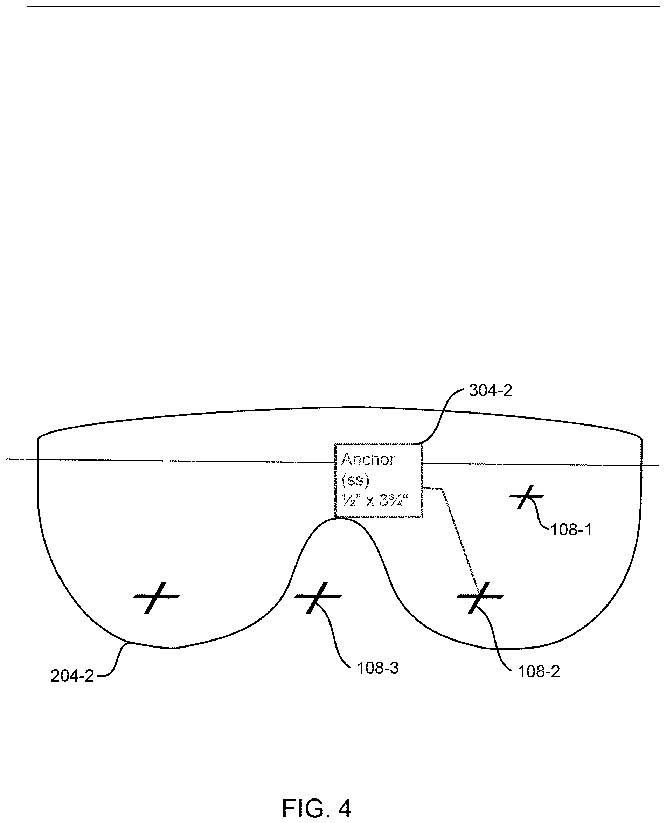

**FIG. 4** depicts an embodiment of presenting second metadata 304-2 to a second augmented-reality device 204-2. Data from the building plan is transmitted to the second augmented-reality device 204-2. The second augmented-reality device 204-2 receives different metadata than the first augmented-reality device 204-1 in FIG. 3. For example, the second metadata 304-2 describes a stainless-steel anchor that is 1/2 inch by 3-3/4 inches to be used at the second point 108-2 because an update for the second point 108-2 was made to change the material and the diameter of the anchor point at the second point 108-2 (e.g., to strengthen an anchor at the second point 108-2). In some embodiments, metadata can be different for different augmented-reality devices 204 based on a role of a user (e.g., different trade). Since the metadata 304 is digital, the metadata 304 can be changed and/or tailored as desired. A person of skill in the art will recognize many variations, including the same augmented-reality device being shown different metadata as plans or roles change. For example, the same user views the same point at a different time, or different users with different roles use the same augmented-reality device and receive different metadata.

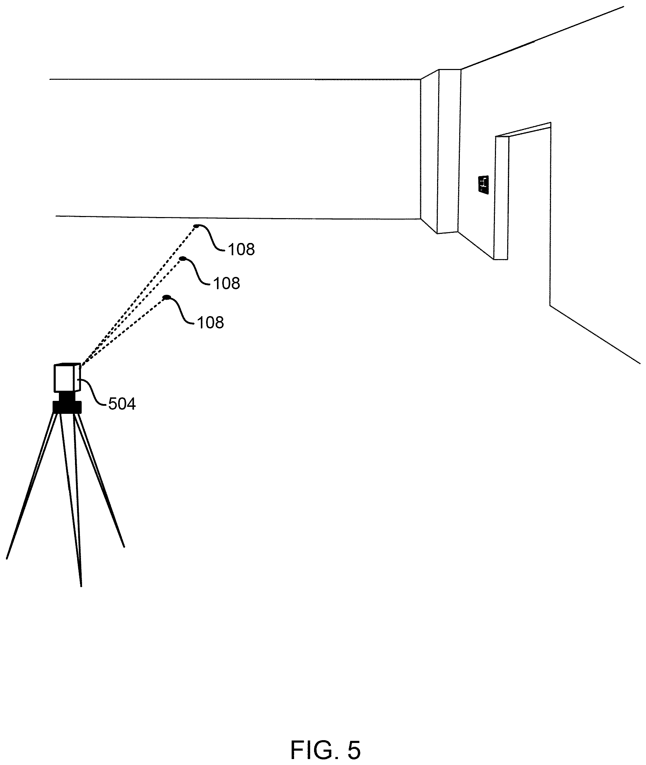

**FIG. 5** depicts an embodiment of a projector 504 marking points 108. FIG. 5 is an example of marking points 108 without using a physical marker. The projector 504, a type of robotic device, shines light to mark points 108. While the embodiment shown in FIG. 5 depicts spots used to mark points 108, other shapes could be used. For example, the projector 504 could make a line to mark an edge for a wall. An augmented-reality device can use markings of points 108 from the projector 504 similarly as physical markings of points 108 in FIGs. 1-4.

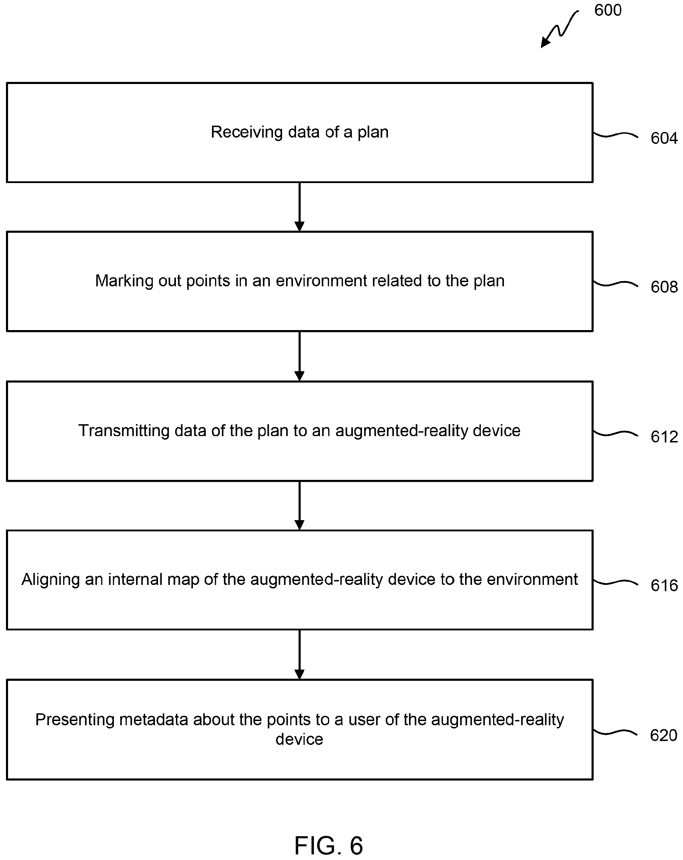

**FIG. 6** illustrates a flowchart of an embodiment of a process 600 for construction layout using robotic marking and augmented-reality metadata. Process 600 begins with step 604, receiving data of a plan. For example, data of a building plan is received by a robotic device (e.g., by robot 104 in FIG. 1 or projector 504 in FIG. 5). The plan can include a plurality of elements (e.g., anchor points, fastener points, locations of walls, locations of electrical components, location of a plumbing manifold, etc.).

In step 608, points are marked out in an environment related to the plan. For example, points are marked out in a construction site related to the plurality of elements in the building plan. In some embodiments, marking out points is performed by a robotic device (e.g., the robotic device makes the marks), and/or points are marked in the construction site within a pre-established accuracy (e.g., as shown in FIGs. 1 and 5).

In step 612, data from the plan is transmitted to an augmented-reality device. For example, data from the building plan is transmitted to the augmented-reality device 204 in FIG. 2. The data from the building plan includes metadata and/or position data of the points (e.g., points 108 in FIG. 2).

In step 616, an internal map of the augmented-reality device is aligned with the environment. For example, an internal map of the augmented-reality device 204 is aligned to the construction site in FIG. 2 using positions of the first point 108-1, the second point 108-2, and the third point 108-3.

In step 620, metadata about the points is presented to a user of the augmented-reality device. For example, metadata 304 about a type of fastener at the second point 108-2 is presented on a display of the augmented-reality device 204 in FIG. 3, as the user looks at, and/or moves closer to, the second point 108-2.

In some embodiments, aligning the internal map of the augmented-reality device to the construction site comprises comparing locations of points in the internal map to data from the building plan. Points can be marked without marking metadata near the points, or marking very little metadata. Transmitting data from the building plan to the augmented-reality device can be performed using one or more wireless connections. For example, data from the building plan can be transmitted from a laptop to a wireless router (e.g., a WiFi router), and from the wireless router to the augmented-reality device. In some embodiments, data from the building plan can be preloaded onto a device. In some embodiments, the robot is wheeled, quadrupedal, or humanoid. Points can be marked on the floor, wall, or ceiling of the construction environment. The process can further include transmitting data from the building plan to a second, third, fourth, or more augmented-reality devices (e.g., to support a plurality of users at a construction site); and/or data from the building plan can be different data sent to different augmented-reality devices (e.g., for different trades and/or different tasks, though each device could use position data of points for aligning with the construction site).

In some configurations, data of the building plan can be a 3D map and/or a list of positions of points. Aligning of the AR device to the environment can use more than points or might not use points for alignment. For example, the AR device could be aligned to the environment using a total station as described in U.S. Patent Appl. No. 16/924,648, filed on July 9, 2020,.

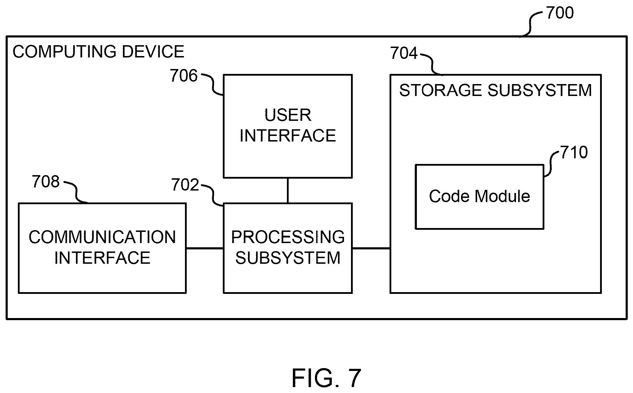

**FIG. 7** is a simplified block diagram of a computing device 700. Computing device 700 can implement some or all functions, behaviors, and/or capabilities described above that would use electronic storage or processing, as well as other functions, behaviors, or capabilities not expressly described. Computing device 700 includes a processing subsystem 702, a storage subsystem 704, a user interface 706, and/or a communication interface 708. Computing device 700 can also include other components (not explicitly shown) such as a battery, power controllers, and other components operable to provide various enhanced capabilities. In various embodiments, computing device 700 can be implemented in a desktop or laptop computer, mobile device (e.g., tablet computer, smart phone, mobile phone), wearable device, media device, application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or electronic units designed to perform a function or combination of functions described above.

Storage subsystem 704 can be implemented using a local storage and/or removable storage medium, e.g., using disk, flash memory (e.g., secure digital card, universal serial bus flash drive), or any other non-transitory storage medium, or a combination of media, and can include volatile and/or non-volatile storage media. Local storage can include random access memory (RAM), including dynamic RAM (DRAM), static RAM (SRAM), or battery backed up RAM. In some embodiments, storage subsystem 704 can store one or more applications and/or operating system programs to be executed by processing subsystem 702, including programs to implement some or all operations described above that would be performed using a computer. For example, storage subsystem 704 can store one or more code modules 710 for implementing one or more method steps described above.

A firmware and/or software implementation may be implemented with modules (e.g., procedures, functions, and so on). A machine-readable medium tangibly embodying instructions may be used in implementing methodologies described herein. Code modules 710 (e.g., instructions stored in memory) may be implemented within a processor or external to the processor. As used herein, the term "memory" refers to a type of long term, short term, volatile, nonvolatile, or other storage medium and is not to be limited to any particular type of memory or number of memories or type of media upon which memory is stored.

Moreover, the term "storage medium" or "storage device" may represent one or more memories for storing data, including read only memory (ROM), RAM, magnetic RAM, core memory, magnetic disk storage mediums, optical storage mediums, flash memory devices and/or other machine-readable mediums for storing information. The term "machine-readable medium" includes, but is not limited to, portable or fixed storage devices, optical storage devices, wireless channels, and/or various other storage mediums capable of storing instruction(s) and/or data.

Furthermore, embodiments may be implemented by hardware, software, scripting languages, firmware, middleware, microcode, hardware description languages, and/or any combination thereof. When implemented in software, firmware, middleware, scripting language, and/or microcode, program code or code segments to perform tasks may be stored in a machine-readable medium such as a storage medium. A code segment (e.g., code module 710) or machine-executable instruction may represent a procedure, a function, a subprogram, a program, a routine, a subroutine, a module, a software package, a script, a class, or a combination of instructions, data structures, and/or program statements. A code segment may be coupled to another code segment or a hardware circuit by passing and/or receiving information, data, arguments, parameters, and/or memory contents. Information, arguments, parameters, data, etc., may be passed, forwarded, or transmitted by suitable means including memory sharing, message passing, token passing, network transmission, etc.

Implementation of the techniques, blocks, steps and means described above may be done in various ways. For example, these techniques, blocks, steps and means may be implemented in hardware, software, or a combination thereof. For a hardware implementation, the processing units may be implemented within one or more ASICs, DSPs, DSPDs, PLDs, FPGAs, processors, controllers, micro-controllers, microprocessors, other electronic units designed to perform the functions described above, and/or a combination thereof.

Each code module 710 may comprise sets of instructions (codes) embodied on a computer-readable medium that directs a processor of a computing device 700 to perform corresponding actions. The instructions may be configured to run in sequential order, in parallel (such as under different processing threads), or in a combination thereof. After loading a code module 710 on a general purpose computer system, the general purpose computer is transformed into a special purpose computer system.

Computer programs incorporating various features described herein (e.g., in one or more code modules 710) may be encoded and stored on various computer readable storage media. Computer readable media encoded with the program code may be packaged with a compatible electronic device, or the program code may be provided separately from electronic devices (e.g., via Internet download or as a separately packaged computer-readable storage medium). Storage subsystem 704 can also store information useful for establishing network connections using the communication interface 708.

User interface 706 can include input devices (e.g., touch pad, touch screen, scroll wheel, click wheel, dial, button, switch, keypad, microphone, etc.), as well as output devices (e.g., video screen, indicator lights, speakers, headphone jacks, virtual- or augmented-reality display, etc.), together with supporting electronics (e.g., digital-to-analog or analog-to-digital converters, signal processors, etc.). A user can operate input devices of user interface 706 to invoke the functionality of computing device 700 and can view and/or hear output from computing device 700 via output devices of user interface 706. For some embodiments, the user interface 706 might not be present (e.g., for a process using an ASIC).

Processing subsystem 702 can be implemented as one or more processors (e.g., integrated circuits, one or more single-core or multi-core microprocessors, microcontrollers, central processing unit, graphics processing unit, etc.). In operation, processing subsystem 702 can control the operation of computing device 700. In some embodiments, processing subsystem 702 can execute a variety of programs in response to program code and can maintain multiple concurrently executing programs or processes. At a given time, some or all of a program code to be executed can reside in processing subsystem 702 and/or in storage media, such as storage subsystem 704. Through programming, processing subsystem 702 can provide various functionality for computing device 700. Processing subsystem 702 can also execute other programs to control other functions of computing device 700, including programs that may be stored in storage subsystem 704.

Communication interface 708 can provide voice and/or data communication capability for computing device 700. In some embodiments, communication interface 708 can include radio frequency (RF) transceiver components for accessing wireless data networks (e.g., Wi-Fi network; 3G, 4G/LTE; etc.), mobile communication technologies, components for short-range wireless communication (e.g., using Bluetooth communication standards, NFC, etc.), other components, or combinations of technologies. In some embodiments, communication interface 708 can provide wired connectivity (e.g., universal serial bus, Ethernet, universal asynchronous receiver/transmitter, etc.) in addition to, or in lieu of, a wireless interface. Communication interface 708 can be implemented using a combination of hardware (e.g., driver circuits, antennas, modulators/demodulators, encoders/decoders, and other analog and/or digital signal processing circuits) and software components. In some embodiments, communication interface 708 can support multiple communication channels concurrently. In some embodiments, the communication interface 708 is not used.

It will be appreciated that computing device 700 is illustrative and that variations and modifications are possible. A computing device can have various functionality not specifically described (e.g., voice communication via cellular telephone networks) and can include components appropriate to such functionality.

Further, while the computing device 700 is described with reference to particular blocks, it is to be understood that these blocks are defined for convenience of description and are not intended to imply a particular physical arrangement of component parts. For example, the processing subsystem 702, the storage subsystem 704, the user interface 706, and/or the communication interface 708 can be in one device or distributed among multiple devices.

Further, the blocks need not correspond to physically distinct components. Blocks can be configured to perform various operations, e.g., by programming a processor or providing appropriate control circuitry, and various blocks might or might not be reconfigurable depending on how an initial configuration is obtained. Embodiments of the present invention can be realized in a variety of apparatus including electronic devices implemented using a combination of circuitry and software. Electronic devices described herein can be implemented using computing device 700.

Various features described herein, e.g., methods, apparatus, computer-readable media and the like, can be realized using a combination of dedicated components, programmable processors, and/or other programmable devices. Processes described herein can be implemented on the same processor or different processors. Where components are described as being configured to perform certain operations, such configuration can be accomplished, e.g., by designing electronic circuits to perform the operation, by programming programmable electronic circuits (such as microprocessors) to perform the operation, or a combination thereof. Further, while the embodiments described above may make reference to specific hardware and software components, those skilled in the art will appreciate that different combinations of hardware and/or software components may also be used and that particular operations described as being implemented in hardware might be implemented in software or vice versa.

Specific details are given in the above description to provide an understanding of the embodiments. However, it is understood that the embodiments may be practiced without these specific details. In some instances, well-known circuits, processes, algorithms, structures, and techniques may be shown without unnecessary detail in order to avoid obscuring the embodiments.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc.

A recitation of "a", "an", or "the" is intended to mean "one or more" unless specifically indicated to the contrary.

## Claims

1. A system for construction layout using robotic marking and augmented-reality metadata, the system comprising:
a robotic device (104, 504) for marking out points (108) in a construction site, comprising instructions to mark out points in the construction site within a pre-established accuracy related to a plurality of elements in a building plan; and
an augmented-reality device (204) comprising instructions to:
receive data of the building plan, wherein data of the building plan includes metadata (304) about the points;
align an internal map of the augmented-reality device to the construction site; and
present metadata about the points to a user of the augmented-reality device as the user looks at points in the construction site.

2. The system of claim 1, wherein aligning the internal map of the augmented-reality device to the construction site comprises comparing locations of points in the internal map to data from the building plan.

3. The system of claim 1, wherein instructions of the robotic device do not have the robotic device mark metadata near points.

4. The system of claim 1, wherein a number of points marked is equal to or greater than 200.

5. The system of claim 1, wherein the pre-established accuracy is equal to or less than 5 centimeters.

6. The system of claim 1, wherein the robotic device is a projector.

7. The system of claim 6, wherein the augmented-reality device is a first augmented-reality device, and the system further comprises a second augmented-reality device configured to receive data of the building plan.

8. A method for construction layout using robotic marking and augmented-reality metadata, the method comprising:
receiving data from a building plan, wherein the building plan includes a plurality of elements;
marking out points in a construction site related to the plurality of elements in the building plan, wherein:
marking out points is performed by a robotic device; and
points are marked in the construction site within a pre-established accuracy;
transmitting data from the building plan to an augmented-reality device,
wherein data from the building plan includes metadata about the points;
aligning an internal map of the augmented-reality device to the construction site; and
presenting metadata about the points to a user of the augmented-reality device as the user looks at the points in the construction site.

9. The method of claim 8, wherein aligning the internal map of the augmented-reality device to the construction site comprises comparing locations of points in the internal map to data from the building plan.

10. The method of claim 8, wherein points are marked without marking metadata near points.

11. The method of claim 8, wherein transmitting data from the building plan to the augmented-reality device is performed using one or more wireless connections.

12. The method of claim 8, wherein a number of points marked is equal to or greater than 200.

## Patentansprüche

1. System für ein Konstruktionslayout unter Verwendung robotischer Markierung und von Metadaten erweiterter Realität (Augmented-Reality-Metadaten), wobei das System umfasst:
eine robotische Vorrichtung (104, 504) zum Markieren von Punkten (108) auf einer Baustelle, umfassend Anweisungen zum Markieren von Punkten auf der Baustelle innerhalb einer vorab eingerichteten Genauigkeit in Bezug auf mehrere Elemente in einem Bauplan; und
eine Vorrichtung für erweiterte Realität (204), umfassend Anweisungen zum
Empfangen von Daten des Bauplans, wobei Daten des Bauplans Metadaten (304) zu den Punkten umfassen;
Ausrichten einer internen Abbildung der Vorrichtung für erweiterte Realität an der Baustelle; und
Präsentieren von Metadaten zu den Punkten für einen Benutzer der Vorrichtung für erweiterte Realität, wenn der Benutzer Punkte auf der Baustelle betrachtet.

2. System nach Anspruch 1, wobei das Ausrichten der internen Abbildung der Vorrichtung für erweiterte Realität an der Baustelle Vergleichen von Positionen von Punkten in der internen Abbildung mit Daten aus dem Bauplan umfasst.

3. System nach Anspruch 1, wobei Anweisungen der robotischen Vorrichtung nicht besagen, dass die robotische Vorrichtung Metadaten in der Nähe von Punkten markiert.

4. System nach Anspruch 1, wobei eine Anzahl markierter Punkte größer oder gleich 200 ist.

5. System nach Anspruch 1, wobei die vorab eingerichtete Genauigkeit kleiner oder gleich 5 Zentimeter ist.

6. System nach Anspruch 1, wobei die robotische Vorrichtung ein Projektor ist.

7. System nach Anspruch 6, wobei die Vorrichtung für erweiterte Realität eine erste Vorrichtung für erweiterte Realität ist und das System ferner eine zweite Vorrichtung für erweiterte Realität umfasst, welche so konfiguriert ist, dass sie Daten des Bauplans empfängt.

8. Verfahren für ein Konstruktionslayout unter Verwendung robotischer Markierung und von Metadaten erweiterter Realität, wobei das Verfahren umfasst:
Empfangen von Daten aus einem Bauplan, wobei der Bauplan mehrere Elemente umfasst;
Markieren von Punkten auf einer Baustelle in Bezug auf die mehreren Elemente in dem Bauplan, wobei:
das Markieren der Punkte von einer robotischen Vorrichtung durchgeführt wird; und
die Punkte auf der Baustelle innerhalb einer vorab eingerichteten Genauigkeit markiert werden;
Senden von Daten aus dem Bauplan an eine Vorrichtung für erweiterte Realität, wobei die Daten aus dem Bauplan Metadaten zu den Punkten umfassen;
Ausrichten einer internen Abbildung der Vorrichtung für erweiterte Realität an der Baustelle; und
Präsentieren von Metadaten zu den Punkten für einen Benutzer der Vorrichtung für erweiterte Realität, wenn der Benutzer die Punkte auf der Baustelle betrachtet.

9. Verfahren nach Anspruch 8, wobei das Ausrichten der internen Abbildung der Vorrichtung für erweiterte Realität an der Baustelle Vergleichen von Positionen in der internen Abbildung mit Daten aus dem Bauplan umfasst.

10. Verfahren nach Anspruch 8, wobei die Punkte markiert werden, ohne Metadaten in der Nähe von Punkten zu markieren.

11. Verfahren nach Anspruch 8, wobei das Senden der Daten aus dem Bauplan an die Vorrichtung für erweiterte Realität über eine oder mehrere drahtlose Verbindungen durchgeführt wird.

12. Verfahren nach Anspruch 8, wobei eine Anzahl markierter Punkte größer oder gleich 200 ist.

## Revendications

1. Système d'aménagement de construction utilisant un marquage robotique et des métadonnées de réalité augmentée, le système comprenant :
un dispositif robotique (104, 504) pour marquer des points (108) sur un site de construction, comprenant des instructions pour marquer des points sur le site de construction dans les limites d'une précision préétablie relative à une pluralité d'éléments dans un plan de construction ; et
un dispositif de réalité augmentée (204) comprenant des instructions pour :
recevoir des données du plan de construction, dans lequel les données du plan de construction incluent des métadonnées (304) sur les points ;
aligner une carte interne du dispositif de réalité augmentée avec le site de construction ; et
présenter des métadonnées au sujet des points à un utilisateur du dispositif de réalité augmentée à mesure que l'utilisateur regarde des points dans le site de construction.

2. Système selon la revendication 1, dans lequel l'alignement de la carte interne du dispositif de réalité augmentée avec le site de construction comprend la comparaison d'emplacements de points dans la carte interne avec des données du plan de construction.

3. Système selon la revendication 1, dans lequel des instructions du dispositif robotique n'ont pas les métadonnées de marquage du dispositif robotique à proximité des points.

4. Système selon la revendication 1, dans lequel un nombre de points marqués est supérieur ou égal à 200.

5. Système selon la revendication 1, dans lequel la précision préétablie est inférieure ou égale à 5 centimètres.

6. Système selon la revendication 1, dans lequel le dispositif robotique est un projecteur.

7. Système selon la revendication 6, dans lequel le dispositif de réalité augmentée est un premier dispositif de réalité augmentée, et le système comprend en outre un second dispositif de réalité augmentée configuré pour recevoir des données du plan de construction.

8. Procédé d'aménagement de construction utilisant un marquage robotique et des métadonnées de réalité augmentée, le procédé comprenant :
la réception de données d'un plan de construction, dans lequel le plan de construction inclut une pluralité d'éléments ;
le marquage de points dans un site de construction relatif à la pluralité d'éléments du plan de construction, dans lequel :
le marquage de points est réalisé par un dispositif robotique ; et
des points sont marqués dans le site de construction dans les limites d'une précision préétablie ;
la transmission de données du plan de construction vers un dispositif de réalité augmentée, dans lequel des données du plan de construction incluent des métadonnées au sujet des points ;
l'alignement d'une carte interne du dispositif de réalité augmentée avec le site de construction ; et
la présentation de métadonnées au sujet des points à un utilisateur du dispositif de réalité augmentée à mesure que l'utilisateur regarde les points dans le site de construction.

9. Procédé selon la revendication 8, dans lequel l'alignement de la carte interne du dispositif de réalité augmentée avec le site de construction comprend la comparaison d'emplacements de points dans la carte interne avec des données du plan de construction.

10. Procédé selon la revendication 8, dans lequel des points sont marqués sans marquer des métadonnées à proximité des points.

11. Procédé selon la revendication 8, dans lequel la transmission de données du plan de construction vers le dispositif de réalité augmentée est réalisée en utilisant une ou plusieurs connexions sans fil.

12. Méthode selon la revendication 8, dans lequel un nombre de points marqués est supérieur ou égal à 200.
